(19) Europäisches Patentamt
European Patent Office
Office européen des brevets

(11) **EP 2 916 507 B1**

## (12) EUROPEAN PATENT SPECIFICATION

(45) Date of publication and mention
of the grant of the patent:
**06.11.2019 Bulletin 2019/45**

(51) Int Cl.:
***H04L 27/34*** *(2006.01)*

(21) Application number: **14305306.4**

(22) Date of filing: **04.03.2014**

(54) **Method for digitally modulating a signal in a communication network**

Verfahren zur digitalen Modulation eines Signals in einem Kommunikationsnetzwerk

Procédé permettant de moduler numériquement un signal dans un réseau de communication

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.09.2015 Bulletin 2015/37**

(73) Proprietor: **Alcatel Lucent**
**91620 Nozay (FR)**

(72) Inventors:
• **Razzetti, Luca Gabriele**
**20871 Vimercate (MB) (IT)**
• **Pepe, Marianna**
**20871 Vimercate (MB) (IT)**

(74) Representative: **Browne, Robin Forsythe**
**Hepworth Browne**
**15 St Paul's Street**
**Leeds LS1 2JG (GB)**

(56) References cited:
**WO-A1-2013/117883**

• **Brendan F.D Moore: "Pairwise optimization of modulation constellations for non-uniform sources", , 1 January 2010 (2010-01-01), XP055134893, ISBN: 978-0-49-465225-1 Retrieved from the Internet: URL:http://search.proquest.com/docview/761 109345**
• **RICCARDO DE GAUDENZI ET AL: "Turbo-coded APSK modulations design for satellite broadband communications", INTERNATIONAL JOURNAL OF SATELLITE COMMUNICATIONS AND NETWORKING, JOHN WILEY & SONS, CHICHESTER, GB, vol. 24, no. 4, 1 July 2006 (2006-07-01), pages 261-281, XP008134566, ISSN: 1542-0973, DOI: 10.1002/SAT.841 [retrieved on 2006-05-19]**
• **MARTIN SJÖDIN ET AL: "Comparison of 128-SP-QAM with PM-16-QAM", OPTICS EXPRESS, vol. 20, no. 8, 9 April 2012 (2012-04-09), page 8356, XP055134850, ISSN: 1094-4087, DOI: 10.1364/OE.20.008356**
• **GIUSEPPE CAIRE ET AL: "Bit-Interleaved Coded Modulation", IEEE TRANSACTIONS ON INFORMATION THEORY, IEEE PRESS, USA, vol. 44, no. 3, 1 May 1998 (1998-05-01), XP011027046, ISSN: 0018-9448**

## Description

### Technical field

The present invention relates to the field of communication networks, in particular, but not exclusively, optical communication networks. More particularly, the present invention relates to a method and an apparatus for digitally modulating a signal (in particular, but not exclusively, an optical signal) in a communication network.

### Background art

As known, digital data are transmitted over a communication channel through a signal with modulated amplitude and/or phase. In particular, in QAM (Quadrature Amplitude Modulation) schemes, digital data are transmitted by modulating both the amplitude and the phase of the signal. Indeed, for these schemes, the modulated signal results from summing two carrier waves that are amplitude modulated, the waves being out of phase by 90º (quadrature carriers). The resulting signal may be represented as

$$S(t)=I(t)\cos(2\pi f_0 t) - Q(t)\sin(2\pi f_0 t) \qquad [1]$$

wherein $f_0$ is the carrier frequency, and I(t) and Q(t) are the two amplitude modulating signals.

At the modulation stage of a transmitter, digital data are mapped to modulation symbols, each symbol being assigned to a given pattern of bits (also referred to in the following as "label"). A labeling function usually maps patterns of m bits into a symbol set of size $M=2^m$. Symbols are typically represented as points of a two-dimensional diagram known as constellation diagram. Each point has a corresponding amplitude and a corresponding phase. For QAM schemes, the constellation points are typically arranged in a multilevel grid within the complex plane, or I-Q plane, each point being represented by an I-coordinate along the in-phase axis and by a Q-coordinate along the quadrature axis (referred to in the following as "I-Q coordinates").

In the following description and in the claims, the expression "modulation scheme" and "constellation" will be used interchangeably to identify the set of modulation symbols. Analogously, the expressions "modulation symbol" and "constellation point" will also be used interchangeably.

In modern optical WDM (Wavelength Division Multiplex) systems, increasing the spectral efficiency of the optical communication channel is becoming a key challenge. This can in principle be pursued by making use of complex multilevel constellations such as those corresponding to higher-order QAM schemes, or X-QAM, namely 8-QAM, 16-QAM, 32-QAM, 64-QAM and higher, at the cost of reducing the SNR (Signal to Noise Ratio) tolerance. Indeed, if the mean energy of the constellation is to remain the same, the points must be closer together and are thus more susceptible to noise corruption. This results in a higher BER (Bit Error Rate). Therefore, higher-order QAM schemes can deliver more data less reliably than lower-order QAM schemes, for constant mean constellation energy.

In the following, the term "bit" will denote a binary digit, and the expression "information bits" will denote the binary digits carrying information to be exchanged between users of the communication network. Moreover, the expression "Euclidean distance" between two constellation points or two modulation symbols indicates the length of a line segment connecting them. The expression "Hamming distance" between two constellation points or two modulation symbols indicate the number of positions at which the corresponding labels (i.e. the bit patterns mapped to the symbols) are different.

Typically, complex constellations are used in conjunction with coding, such as known FEC (Forward Error Correction) coding, realizing the so called "Coded Modulation" (CM) schemes. Coding may be performed by applying a linear (n, k) block code, which assigns a codeword of length n to an input data block of k information symbols, by adding to the information symbols a block of n-k parity symbols. The ratio between the number k of symbols of the input data block and the number n of symbols of a codeword is called "code rate" and typically indicated by R. According to coded modulation schemes, the codewords comprising information symbols and parity symbols at the output of the encoder are mapped over the multilevel constellation. Moreover, it is known simplifying the architecture of the FEC coding/decoding by applying the so called "Bit Interleaved Coded Modulation (BICM)" scheme according to which the codewords generated by a binary FEC code may be bit-by-bit interleaved prior to mapping over the multilevel constellation through a labeling map. The BICM scheme is described in Caire et al., "Bit-Interleaved Coded Modulation", IEEE Transactions on Information Theory, Vol. 44, No. 3, May 1998.

As known, a BICM scheme suffers, from a capacity point of view, from an inherent loss with respect to a corresponding CM scheme. Unlike the capacity of a CM scheme, the capacity of a BICM scheme strongly depends on the utilized labeling map $\mu$, i.e. on the labeling function that defines the assignment of certain bit patterns to the modulation symbols. As known, Gray labeling is such that modulation symbols at minimum Euclidean distance are assigned bit patterns differing in only one bit, or, in other words, modulation symbols at minimum Euclidean distance have Hamming distance equal to 1. It is known that when a Gray labeling is used, the capacity of a BICM scheme has a negligible loss with respect to the capacity of the corresponding CM scheme. For most constellations, such as QPSK, 16-QAM, 64-QAM, a Gray labeling exists and hence the CM capacity can be closely approached by the BICM scheme. However, for other constellations, such as 8-QAM, a Gray labeling does not exist and the BICM scheme experiences a non negligible capacity loss with respect to the CM scheme.

In order to at least partly recover the capacity loss of a BICM scheme, it is known to implement iterative decoding, as described in EP 0 948 140 B1. According to the method disclosed in EP 0 948 140 B1, at the decoder the received symbols are de-mapped and ungrouped by calculating a log-likelihood ratio value for each bit of a symbol. These soft values are de-interleaved and decoded by a SISO (Soft-In Soft-Out) decoder that provides extrinsic information about the bits of the codeword. The extrinsic information is fed back to the de-mapper which provides updated soft information on the bits of the codeword. The iterative operations are stopped by an arbitrary decision criterion (e.g. after a fixed number of iterations or when a certain bit error rate is reached).

Brendan F.D. Moore, "Pairwise optimization of modulation constellations for non-uniform sources", 1 January 2010, ISBN: 978-0-49-465225-1, discloses designing two-dimensional signal constellations for the transmission of binary non-uniform memoryless sources over additive white Gaussian noise channels and an algorithm optimizing a constellation by re-arranging its points in a pairwise fashion.

WO 2013/117883 discloses a method and transmitter and receiver for determining and transmitting or receiving a non-uniform QAM signal comprises selecting a signal to noise ratio for a channel and forward error corrector and then determining positions of constellation points that maximise a measure of channel capacity at the selected signal to noise ratio. The position of one constellation point and another constellation point within the constellation are constrained to be equal to one another prior to determining the positions of the constellation points. In doing so, a so called condensed QAM constellation arrangement may be derived having fewer than conventional number of constellation points for a given QAM scheme.

Riccardo De Gaudenzi et al., "Turbo-coded APSK modulations design for satellite broadband communications", International Journal of satellite communications and networking, vol. 24, no. 4, 1 July 2006, pages 261-281, discloses designing coded modulations based on amplitude phase shift keying (APSK) modulation with application to satellite broadband communications. The APSK constellation is optimized on the basis of on the minimum distance criterion or on the mutual information..

## Summary of the invention

The inventors noticed that there is a strong demand for high speed WDM optical communication network implementations (e.g. moving from 10 Gbit/s networks to 100/400/500 Gbit/s networks). As mentioned above, these implementations typically employ complex constellations that allow maximizing the spectral efficiency, at the expense, however, of a reduced reliability in the presence of noise. The inventors perceived that for high speed WDM optical communication network implementations, the BICM scheme may be used, which allows improving the performance of the FEC decoder for complex constellations, thus increasing their reliability. Moreover, the BICM scheme may be used in combination with iterative decoding as disclosed in EP 0 948 140 B1, which allows at least partially recovering the inherent capacity loss of the BICM scheme.

Disadvantageously, applying the iterative decoding in combination with a BICM scheme leads to a huge increase in the complexity of the demodulating and decoding stage at the receiver of a WDM network node. In particular, the inventors noticed that the demodulating and decoding stage implementing the iterative decoding disadvantageously has a large device area and it consumes a great amount of power. Therefore, manufacturing and operation of a receiver implementing iterative decoding involve high costs.

In view of the above, it is an object of the present invention to provide a method and apparatus for digitally modulating a signal in a communication network (in particular, but not exclusively, an optical communication network) which overcomes the aforesaid drawback. In particular, it is an object of the present invention to provide a method and apparatus for digitally modulating a signal in a communication network which allows implementing a bit-interleaved coded modulation scheme having a reduced capacity loss without increasing the complexity of the demodulating and decoding stage at the receiver of a network node.

The invention is defined and limited by the scope of appended claims 1-13. In the following description, any embodiment(s) referred to and not falling within the scope of the appended claims, is (are) merely example(s) useful to the understanding of the invention.

According to a first aspect, the present invention provides a method for digitally modulating a signal in a communication network, such method comprising selecting a modulation scheme represented by a given constellation of points within the complex plane, each point having a given initial position comprising an I-coordinate and a Q-coordinate in the complex plane, the given constellation having a mean symbol energy, and deforming at least one of the constellation points around the initial position so as to optimize a performance function while keeping constant the mean symbol energy.

Preferably, the method further comprises selecting a computation subset of constellation points, expressing at least one of the I-coordinate and Q-coordinate of at least one point of the computation subset as a function of a number of parameters, determining the performance function as a function of the parameters and optimizing the performance function with respect to the parameters and subject to one or more optimization constraints.

Preferably, optimizing a performance function comprises one of the following: minimizing a mean symbol energy to noise variance ratio, minimizing a bit error rate, maximizing a capacity of said modulation scheme.

Preferably, the optimization constraints comprise one or more of: keeping the mean symbol energy at a constant value, keeping the bit error rate at a constant value, keeping the capacity at a constant value, keeping the noise variance at a constant value.

Preferably, selecting the computation subset of constellation points is performed on the basis of implementation constraints comprising one or more of: maintaining a symmetry of the constellation, maintaining a rotational invariance of the constellation, maintaining a given arrangement of the constellation points within the complex plane.

Preferably, expressing at least one of the I-coordinate and Q-coordinate of at least one point of the computation subset as a function of a number of parameters comprises associating the number of parameters with the I-coordinate and Q-coordinate of at least one point of the computation subset on the basis of parameterization criteria including one or more of: increasing a Euclidean distance between constellation points having an Hamming distance higher than 1, arranging the constellation points in a uniform manner within the complex plane, increasing a Euclidean distance between constellation points at a minimum Hamming distance without bringing those points nearer to other constellation points.

Preferably, the method further comprises finding target parameters that optimize the performance function and modifying the at least one of the I-coordinate and Q-coordinate of the at least one point of the computation subset using the target parameters.

Preferably, the method further comprises modifying the I-coordinate and/or the Q-coordinate of one or more other points of the constellation on the basis of the implementation constraints.

According to embodiments of the present invention, the given modulation scheme is a bit interleaved coded modulation scheme.

Preferably, the given modulation scheme is one of: a SP-16QAM scheme, a differential 16-QAM scheme.

According to a second aspect, the present invention provides a computer program product comprising computer-executable instructions for performing, when the program is run on a computer, the steps of the method as set forth above.

According to a third aspect, the present invention provides a modulator for a transmitter of a network node of a communication network, the modulator being configured to digitally modulate a signal according to a modulation scheme represented by a given constellation of points within the complex plane, each point having a given initial position comprising an I-coordinate and a Q-coordinate in the complex plane, the given constellation having a mean symbol energy, and to digitally modulate the signal according to the modulation scheme wherein at least one of the constellation points is deformed around said initial position so as to optimize a performance function while keeping constant the mean symbol energy.

Preferably, the modulator comprises a mapping table storing a labeling map of the modulation scheme comprising the I-coordinates and the Q-coordinates of the constellation points in the complex plane, the mapping table being configured to be updated with a modified I-coordinate and/or a modified Q-coordinate of the at least one of the constellation points.

According to a fourth aspect, the present invention provides a network node for a communication network, the network node comprising a modulator as set forth above.

According to a fifth aspect, the present invention provides a communication network comprising a network node as set forth above.

## Brief description of the drawings

The present invention will become clearer by reading the following detailed description, given by way of example and not of limitation, to be read by referring to the accompanying drawings, wherein:

- Figure 1 schematically shows a transmitter and a receiver for implementing a BICM scheme according to the present invention;
- Figure 2a schematically shows an exemplary constellation for an 8-QAM scheme;
- Figure 2b schematically shows an exemplary labeling for the constellation of Figure 2a;
- Figure 3a schematically shows an exemplary constellation for a 16-QAM scheme;
- Figure 3b schematically shows an exemplary labeling for the constellation of Figure 3a with differential coding of the most significant bits;
- Figure 4 schematically shows a mapping table for the exemplary SP-16QAM scheme of Figure 2a;

- Figure 5 shows the CM capacity and the BICM capacity for the SP-16QAM exemplary scheme of Figures 2a-2b;
- Figure 6 schematically shows the constellation of Figures 2a-2b in which arrows indicate the deformation of constellation points according to the method of the present invention;
- Figure 7 shows two BER curves associated with the SP-16QAM exemplary scheme of Figures 2a-2b; and
- Figure 8 schematically shows the constellation of Figures 3a-3b in which arrows indicate the deformation of constellation points according to the method of the present invention.

## Detailed description of preferred embodiments of the invention

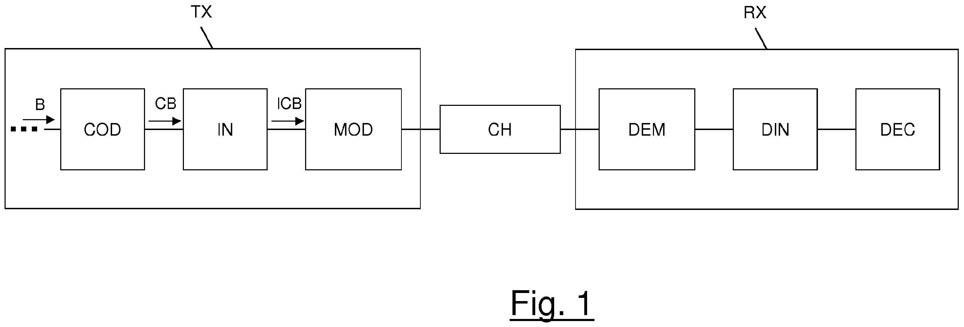

Figure 1 shows a schematic block diagram of a communication system CS according to an embodiment of the present invention.

The communication system CS comprises a transmitter TX, a channel CH and a receiver RX.

The transmitter TX may be comprised in a first node of a communication network (not shown in the drawings), while the receiver RX may be comprised in a second node of the same communication network (not shown in the drawings), connected to the first node by the channel CH. The transmitter TX and the receiver RX may also be comprised within a same node of the communication network.

The communication network is preferably an optical communication network. More preferably, the communication network is a WDM (Wavelength Division Multiplexing) optical communication network. In this case, the channel CH may be implemented over an optical fiber. The receiver RX is preferably a coherent optical receiver.

The transmitter TX and the receiver RX are preferably configured to implement a BICM (Bit - Interleaved Coded Modulation) scheme. In particular, the transmitter TX preferably comprises an encoder COD, an interleaver IN and a modulator MOD, connected in cascade. The receiver RX in turn preferably comprises a demodulator DEM, a de-interleaver DIN and a decoder DEC, connected in cascade.

Both the transmitter TX and the receiver RX may comprise other components that are not shown in the drawings, as they are not relevant to the present description.

In operative conditions, the encoder COD of the transmitter TX receives a digital data stream B of information bits from a source not shown in Figure 1. The encoder COD preferably encodes the data stream B by applying to it an error correction code. Preferably, the encoder COD encodes the data stream B by applying a Forward Error Correction (FEC) code. The encoder COD then preferably outputs an encoded data stream CB comprising information bits and parity bits, which is forwarded to the interleaver IN. In particular, within the encoded data stream CB, bits are grouped in codewords, each codeword comprising both information bits and parity bits.

The interleaver IN preferably receives the encoded data stream CB and processes it in order to bit-by-bit interleaving the bits of the codewords within the encoded data stream CB, generating an encoded data stream with interleaved bits, indicated in the following as interleaved encoded data stream ICB.

The operations of the encoder COD and the interleaver IN will not be described in greater detail as they are known and they are not relevant to the present description.

Then, the interleaver IN preferably forwards the interleaved encoded data stream ICB to the modulator MOD. The modulator MOD uses the interleaved encoded data stream ICB to modulate the amplitude and/or the phase of one or more carrier signals according to a given digital modulation scheme, in order to generate a modulated signal S(t) to be transmitted over the transmission channel CH.

In particular, the operation of the modulator MOD preferably comprises mapping patterns of bits of the interleaved encoded data stream ICB to the modulation symbols according to a labelling map $\mu$. In particular, the interleaved encoded data stream ICB is broken into patterns of m bits each, which are mapped into a set of $M=2^m$ modulation symbols. In other words, each modulation symbol is given a label in the form of a bit pattern comprising m bit. Each modulation symbol is associated with a respective amplitude and/or phase of the carrier signal(s) and it can be represented as a point within the constellation of the considered modulation scheme. Each point of a constellation may be represented by its I-coordinate and Q-coordinate, i.e. the horizontal coordinate and vertical coordinate, respectively, in the I-Q plane. The modulation scheme may be an X-QAM scheme, such as an 8-QAM or 16-QAM scheme. A given modulation scheme is associated with a respective mean symbol energy Es.

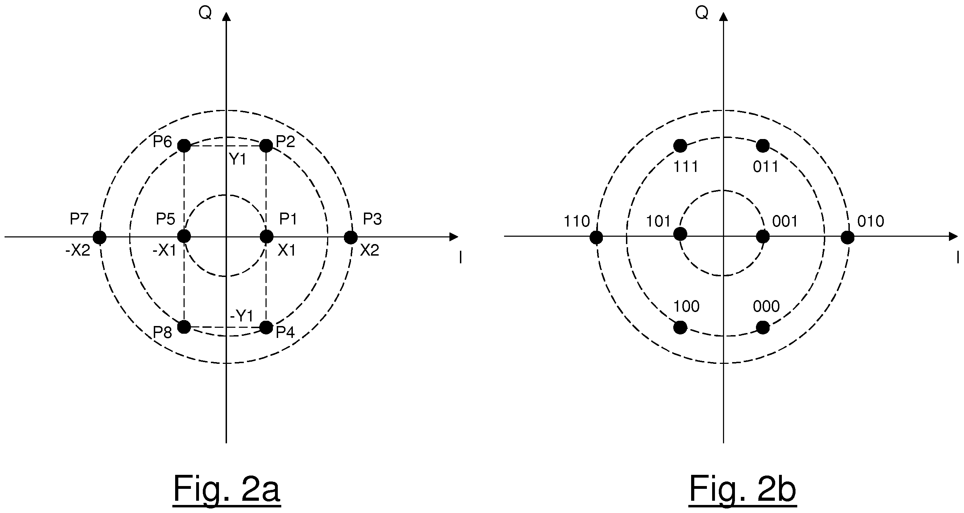

Figure 2a shows the constellation of an example of 8-QAM scheme which results from the set partitioning of a 16-QAM scheme. The scheme of Figure 2a is known as "SP-16QAM" scheme. It shows eight points P1-P8 in the I-Q plane. Each constellation point P1-P8 is associated with an I-coordinate and a Q-coordinate, each representing the amplitude of the respective quadrature carrier. The I-coordinate of the constellation points has one of the following values: -X2, -X1, X1, X2. The Q-coordinate of the constellation points has one of the following values: -Y1, 0, Y1. The constellation is symmetric with respect to both the I-axis and the Q-axis of the complex plane. Moreover, as can be noticed, the constellation points are located on three concentric rings. Figure 2b shows the bit patterns mapped into the corresponding modulation symbols according to an exemplary labelling map. In this case, the labels comprise three bits each. It is to be noticed that the exemplary labeling represented in Figure 2b is not a Gray labelling. Indeed, as mentioned above, a Gray labeling does not exist for the SP-16QAM scheme shown in Figure 2a, as well as for other 8-QAM schemes. The Hamming distance between two points of the constellation at minimum Euclidean distance is everywhere equal to 1, except between points P1 and P3, and between points P5 and P7, where the Hamming distance is equal to 2.

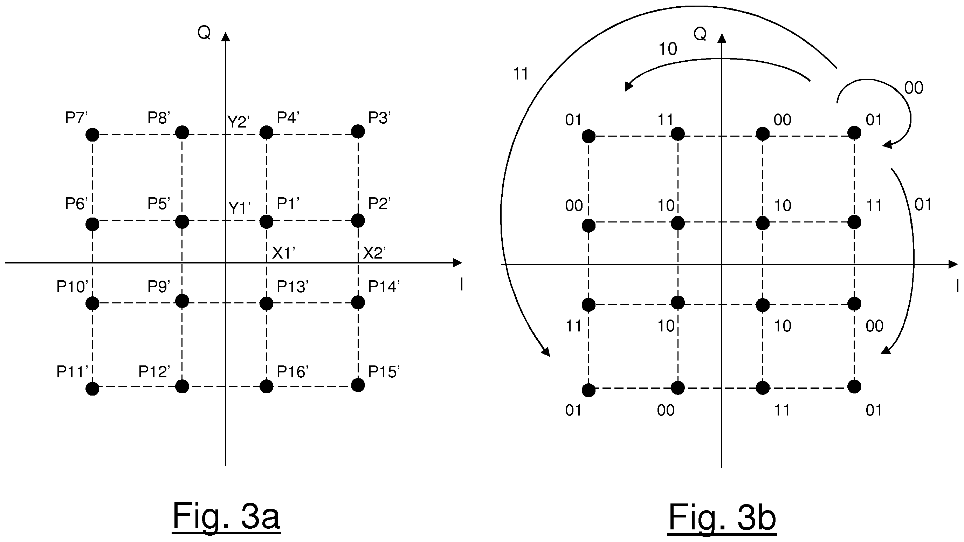

Figure 3a shows the constellation of an exemplary known 16-QAM scheme. It shows sixteen points in the I-Q plane. The I-coordinate of the constellation points has one of the following values: -X2', -X1', X1', X2'. The Q-coordinate of the constellation points has one of the following values: -Y2', -Y1', Y1', Y2'. Also in this case, the constellation is symmetric with respect to both the I-axis and the Q-axis of the complex plane. In principle, for a 16-QAM scheme a Gray labelling exists. However, it is known that, for optical systems, the optical channel may be affected by the so called phase slips. In order to face this problem, known differential coding may be used. Figure 3b shows a 16-QAM scheme in which the two least significant bits are coded in a rotationally invariant manner, and the two most significant bits are differentially coded.

The exemplary labeling shown in Figure 3b is not a Gray labeling. Indeed, the Hamming distance between points P4' and P8', between points P6' and P10', between points P12' and P16' and between points P2' and P14', is equal to 2 for the two least significant bits. The 16-QAM modulation scheme described above will be referred to in the following as "differential 16-QAM".

The labelling map $\mu$ is preferably stored in the form of a mapping table within the modulator MOD. The mapping table preferably associates each bit pattern with a respective modulation symbol. More preferably, the mapping table associates each bit pattern with the I-coordinate and the Q-coordinate of the respective modulation symbol.

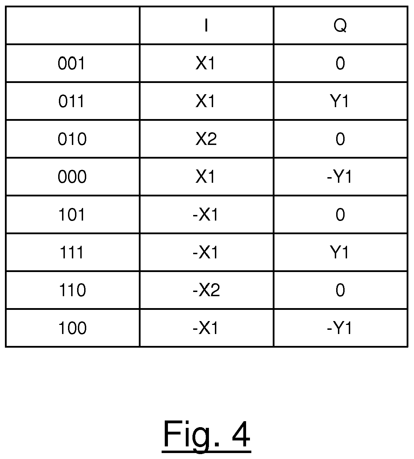

Figure 4 shows an exemplary mapping table comprising the labeling map $\mu$ shown in Figure 2b for the exemplary 8-QAM scheme.

The modulator MOD preferably comprises a mapping block which receives the bit pattern to be transmitted and, on the basis of the labelling map stored in the mapping table, recovers and outputs the I-coordinate and the Q-coordinate of the corresponding modulation symbol.

The modulator MOD is preferably included in an ASIC (Application Specific Integrated Circuit) comprising a digital-to-analog converter, DAC, which receives the bit stream and outputs the I-coordinate and the Q-coordinate of the modulation symbols.

Then, the transmitter TX preferably generates the modulated signal S(t) (see equation [1] for an X-QAM scheme) using the I-coordinate and the Q-coordinate recovered from the mapping table and transmits it over the transmission channel CH to the receiver RX. As already mentioned, in case of an X-QAM scheme, the I-coordinate of a modulation symbol is the amplitude of the $\cos(2\pi f_0 t)$ carrier and the Q-coordinate of the modulation symbol is the amplitude of the $\sin(2\pi f_0 t)$ carrier used for transmitting that modulation symbol.

The channel CH may be modelled as an Additive White Gaussian Noise (AWGN) channel, i.e. a channel over which the transmitted signal may be subject to linear addition of wideband or white noise with a Gaussian distribution of amplitude having a variance equal to $\sigma^2$.

At the receiver RX, a modulated signal S'(t) is received by the demodulator DEM. The demodulator DEM demodulates the received modulated signal S'(t) by performing a coherent demodulation. In particular, the demodulator DEM estimates the amplitude and/or phase of the received modulated signal S'(t) and, on the basis of such estimation, decides the corresponding modulation symbols of the constellation diagram according to the modulation scheme adopted. In particular, the demodulator DEM preferably stores the same labelling map $\mu$ as the modulator MOD at the transmitter TX and performs an inverse operation with respect to the modulator MOD, namely associates each decided modulation symbol with a respective bit pattern on the basis of the labelling map. This is known as "hard decision demapping". A soft decision demapping may be alternatively performed according to which the demodulator DEM calculates soft reliability values as inputs for the decoder DEC. In this case too, the original constellation points should be known at the receiver RX. The demodulator DEM is preferably included in an ASIC comprising an analog-to-digital converter, ADC.

When hard decision demapping is implemented, the demodulator DEM recovers a digital data stream. The recovered data stream is then forwarded to the de-interleaver DIN which preferably processes it in order to de-interleave the bits. The de-interleaved data stream is forwarded to the decoder DEC, which preferably decodes the data stream by applying a decoding algorithm which is suitable for the error correction code applied at the transmitter TX by the encoder COD. In case of soft decision demapping is implemented, the deinterleaver DIN deinterleaves the soft values and they are forwarded to the decoder DEC that recovers and decodes the digital data stream.

The operations of the de-interleaver DIN and the decoder DEC will not be described in greater detail as they are known and they are not relevant to the present description.

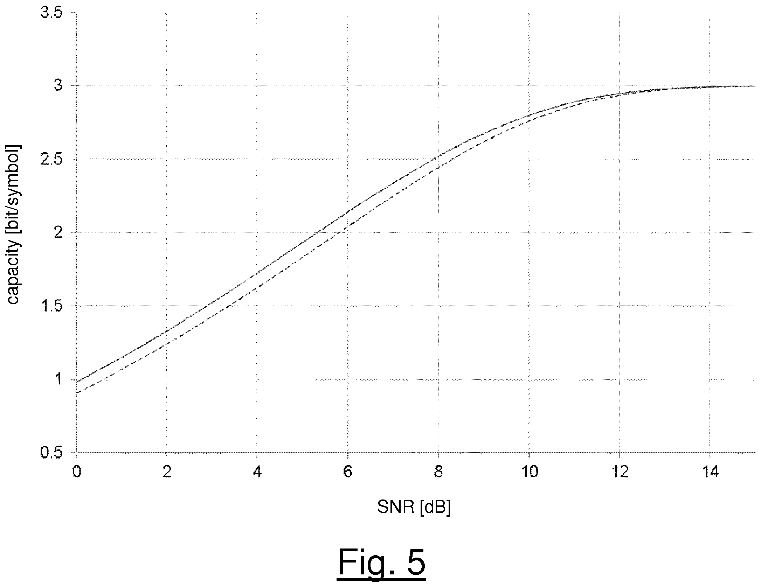

Figure 5 shows the capacity of the exemplary SP-16QAM scheme with respect to the signal-to-noise ratio SNR according to simulations performed by the inventors. Both the CM capacity (solid line) and the BICM capacity (dashed line) of the SP-16QAM scheme are reported in Figure 5. As can be seen from Figure 5, the performance of the BICM scheme is worse than the performance of the CM scheme. In particular, the BICM capacity shows an SNR penalty with respect to the CM capacity which is equal to about 0.4 dB, at a code rate R equal to about 0.8 corresponding to a capacity of 2.4 bit/symbol.

The method of the present invention preferably comprises selecting a modulation scheme for digitally modulating the signal over the channel CH, such modulation scheme being a binary coded modulation scheme in which the bit patterns are mapped into the modulation symbols according to a non-Gray labelling map. Examples of such modulation schemes are the SP-16QAM scheme and the 16-QAM scheme described above with reference to Figures 2a-2b and 3a-3b, respectively. In these cases indeed, as explained before, the BICM capacity of the modulation scheme suffers from a non-negligible loss with respect to the CM capacity. As already described above, the modulation scheme is associated with a given constellation of points arranged in given positions within the complex plane.

Then, according to the method of the present invention, at the modulator MOD, before mapping the bit patterns of the interleaved encoded digital data stream ICB into the set of modulation symbols of the selected modulation scheme, at least one constellation point is deformed around its initial position, i.e. the I-coordinate and/or the Q-coordinate of the at least one constellation point are/is modified around the original I-coordinate and/or the original Q-coordinate, respectively, while keeping constant the mean symbol energy of the constellation.. Preferably, the method of the present invention, comprises deforming at least a subset of constellation points around their initial positions.

Preferably, deformation is performed by optimizing a performance function associated with the modulation scheme, which is determined as a function of one or more parameters associated with the I-coordinate and/or the Q-coordinate of at least one constellation point of the modulation scheme, the optimization being performed starting from the unmodified constellation. The performance function is preferably one of: a symbol energy-to-noise ratio $Es/\sigma^2$, a bit error rate BER, a BICM capacity C. The constraints are preferably one or more of: keeping the symbol energy Es at a constant value, keeping the bit error rate BER at a constant value, keeping the BICM capacity C at a constant value, keeping the noise variance $\sigma^2$ at a constant value.

The method of the present invention, as it will be clearer in the following, comprises finding a deformation that results in advantageous features, such as, for instance, increasing the Euclidean distance between constellation points at higher Hamming distance, arranging the constellation points in a more uniform manner within the complex plane and increasing the Euclidean distance between constellation points even at minimum Hamming distance without bringing those points nearer to other constellation points.

In this way, the receiver RX may better distinguish the constellation points (namely the modulation symbols) associated with bit patterns having a sub-optimal Hamming distance, due to non-Gray labelling. Therefore, the reliability of the system increases. This allows recovering at least partially the capacity loss associated with BICM schemes, as it will be clearer herein after.

In the following, the determination of the constellation deformation according to the method of the present invention will be described in greater detail. In particular, the method of the present invention preferably comprises selecting a subset of the constellation points of the given modulation scheme for the computation of the deformation (computation subset of points or computation points). In order to do this, the method further comprises expressing the I-coordinates and/or the Q-coordinates of the points of the computation subset as a function of one or more variables or parameters $\underline{v}=\{\alpha, \beta, \gamma,...\}$. For a given modulation scheme with M modulation symbols, this step preferably provides for selecting a computation subset of N constellation points, where N is an integer number lower than or equal to M (in this latter case, the computation subset comprises all the constellation points). The I-coordinate and the-Q coordinate of the i-th constellation point within the computation subset will be indicated as $I_i(\underline{v})$ and $Q_i(\underline{v})$, respectively, wherein i=1, ..., N.

Moreover, the selection of the computation subset of constellation points is preferably performed taking into account implementation constraints which may lead to simplifying the processing of the received modulation symbols at the receiver RX. Examples of these implementation constraints are:

- maintaining a symmetry of the constellation points;
- maintaining a rotational invariance of the constellation points;
- maintaining a given arrangement of the constellation points within the complex plane, such as a multiple ring arrangement.

According to embodiments of the present invention, the deformation is computed for the computation points only, and a computation subset with N<M is selected in case the deformation of the other points of the constellation may be found on the basis of the implementation constraints. For example, if the constellation is symmetric with respect to the I-axis and the Q-axis, this may lead to select a computation subset of N<M constellation points comprising the points of one quadrant, as the deformation of the other points may be obtained from the deformation of the computation points by simply considering the symmetries of the constellation.

The selection of the computation subset of constellation points and the implementation constraints that may be considered will be clearer in the following description with reference to two examples of application (with reference to the SP-16QAM scheme and the differential 16-QAM scheme described above) of the method of the present invention.

The parameters $\underline{v}$ may comprise, for instance, an amplitude normalizing factor which may be associated with all the coordinates of the constellation points of the considered computation subset. Moreover, the parameters may be associated with the I-coordinates and/or Q-coordinates of all the points within the considered computation subset or of only some of them (even a single point). Association may be performed on the basis of parameterization criteria that may take into account the features identified above. In particular, the parameterization criteria may include one or more of:

- increasing the Euclidean distance between constellation points at Hamming distance higher than 1;
- arranging the constellation points in a uniform manner within the complex plane; and
- increasing the Euclidean distance between constellation points at minimum Hamming distance without bringing those points nearer to other constellation points.

For instance, if two constellation points have a Hamming distance higher than 1 and are arranged on the I-axis, a parameter may be associated with the I-coordinate of at least one of those points, since the I-coordinate is the coordinate that should be modified for increasing the Euclidean distance of those points. In the following description, the two examples of application of the method of the present invention will further illustrate the parameterization criteria used by the inventors of the present invention.

Then, the method of the present invention preferably comprises optimizing a performance function. According to preferred embodiments, optimizing a performance function comprises determining the performance function as a function of the parameters $\underline{v}$ and solving a constrained minimization problem around the un-deformed constellation (i.e. the un-deformed constellation points of the considered computation subset of constellation points are the starting point for the minimization) as follows:

$$\text{minimize}\quad \frac{Es}{\sigma^2}(\underline{v}) \qquad\qquad [2]$$

$$\underline{v}$$
$$\text{subject to}\quad Es(\underline{v}) = Es^* \qquad\qquad [3]$$

$$BER(\sigma^2, \underline{v}) = BER^* \qquad\qquad [4]$$

i.e. finding the parameters $\underline{v}$, and hence the I-, Q- coordinates of the constellation points of the considered computation subset, which lead to minimizing the symbol energy-to-noise ratio $Es/\sigma^2$, by keeping the mean symbol energy $Es$ at a constant value $Es^*$ and by keeping the BER at a constant value $BER^*$. Solution of the minimization problem above comprises finding a set $\underline{v}^* = \{\alpha^*, \beta^*, \gamma^*, ...\}$ of target parameters minimizing the symbol energy-to-noise ratio subject to optimization constraints expressed by equations [3] and [4].

The mean symbol energy $Es(\underline{v})$ may be expressed by the following equation:

$$Es(\underline{v}) = \frac{\sum_{i=1}^{M} E_i(\underline{v})}{M} \qquad\qquad [5]$$

where M is the number of points within the considered constellation and $E_i(\underline{v})$ is the energy associated with the i-th constellation point. The value of $E_i(\underline{v})$ of the i-th modulation symbol may be computed starting from the I-Q coordinates according to the following equation:

$$E_i(\underline{v}) = I_i^2(\underline{v}) + Q_i^2(\underline{v}). \qquad\qquad [6]$$

The BER may be computed as a function of the variance $\sigma^2$ of the noise and the I-Q coordinates of the constellation points associated with the given modulation scheme. The BER formula depends on the considered modulation scheme and, as known, may be found theoretically. Alternatively, the BER may be simulated according to known procedures.

Once the minimization problem above is solved, the modified I-Q coordinates of the constellation points of the considered computation subset are preferably found by using the target parameters $\underline{v}^*$. If implementation constraints are considered and N<M, the I-Q coordinates of the constellation points not comprised within the computation subset are preferably modified as well, in a manner which is tied to the modification of the I-Q coordinates of the computation points according to the considered implementation constraints, as it has been already mentioned above. Therefore, in this way, the points of the deformed constellation advantageously fulfil the implementation constraints.

According to an alternative embodiment of the present invention, optimizing a performance function comprises solving the following constrained minimization problem:

$$\text{minimize} \quad \frac{Es}{\sigma^2}(\underline{v}) \qquad\qquad [2]$$

$$\underline{v}$$

$$\text{subject to} \quad Es(\underline{v}) = Es^* \qquad\qquad [3]$$

$$C(\sigma^2, \underline{v}) = C^* \qquad\qquad [4']$$

according to which the BICM capacity C is kept at a constant value C* instead of the bit error rate BER.

The inventors noticed that, as the method of the present invention provides small deformations of the constellation points around the un-deformed constellation, optimizing a performance function may further alternatively involve the minimization of the BER (by keeping constant the mean symbol energy Es and the noise variance $\sigma^2$), or the maximization of the BICM capacity C (by keeping constant the mean symbol energy Es and the noise variance $\sigma^2$).

In the following description, the method according to preferred embodiments of the present invention will be described with reference to the exemplary SP-16QAM scheme represented in Figure 2a. As noticed above, this scheme is symmetric with respect to both the I-axis and the Q-axis and the constellation points are arranged on three concentric rings.

In this case. the following implementation constraints may be identified:

- maintaining the symmetries of the constellation; and
- maintaining the constellation points on three concentric rings.

On the basis of the implementation constraints identified above, a computation subset of constellation points to be parameterized is chosen comprising the constellation points located in the first quadrant, namely P1, P2 and P3. Indeed, as mentioned above, this constellation is symmetric with respect to both the I-axis and the Q-axis. In this way, the minimization problem involves only three points, and the other points of the constellation will be deformed in a symmetric manner. This advantageously guarantees that the implementation constrains above are fulfilled.

In this case, the I-Q coordinates of points P1, P2 and P3 may be written as a function of two parameters, namely a normalizing factor $\alpha$ and a parameter $\gamma$, as indicated in the following:

$$P1 = \left(\sqrt{2}\alpha\gamma, 0\right) \qquad\qquad [7]$$

$$P2 = \left(\frac{\sqrt{2}}{2}\alpha(3 - \gamma), \frac{\sqrt{2}}{2}\alpha(3 + \gamma)\right) \qquad\qquad [8]$$

$$P3 = \left(3\sqrt{2}\alpha, 0\right) \qquad . \qquad\qquad [9]$$

The constrained minimization problem to be solved according to preferred embodiments of the method of the present invention is the problem of equations [2]-[4] above, namely:

$$\text{minimize} \quad Es(\alpha, \gamma)/\sigma^2$$

$$\alpha, \gamma$$

$$\text{subject to} \quad Es(\alpha, \gamma) = Es^*$$

$$BER(\sigma^2, \alpha, \gamma) = BER^* .$$

Preferably, the constant value BER* of the bit error rate is chosen as the BER limit of the error correction code employed at the encoder COD of the transmitter TX. This value, in the following example, is equal to about 3.1 E-2.

In this case, applying the optimization constraint on the mean symbol energy of equation [3] and using equation [5] for points P1, P2, P3 (N=3) lead to find a relationship between parameters $\alpha$ and $\gamma$, i.e.:

$$\alpha = \sqrt{\frac{Es^*}{9+\gamma^2}} \cdot \qquad [10]$$

Within the unmodified constellation shown in Figure 2a, $\gamma$=1, $\alpha$=$\sqrt{(Es^*/10)}$, and points P1, P2, P3 may be expressed as:

$$P1=(X1,0)=(\sqrt{(Es^*/5)}, 0)$$

$$P2=(X1, Y1)=(\sqrt{(Es^*/5)}, 2\sqrt{(Es^*/5)})$$

$$P3=(X2, 0)=(3\sqrt{(Es^*/5)}, 0).$$

Therefore, the minimization problem above turns out to be a one-dimensional minimization problem over parameter $\gamma$, whose solution may be found by applying a known algorithm such as the known least mean square algorithm (LSM) starting from the unmodified constellation. Alternatively, in case the minimization involves few parameters, such as one single parameter as in the situation described above, the minimization problem may be solved by a "trial and error" procedure starting from the unmodified constellation. The "trial and error" procedure is also preferably used when the BER cannot be theoretically computed in a closed form and it is simulated.

In this case, the inventors simulated the BER of the system and, applying a trial and error procedure starting from the unmodified points P1, P2, P3 reported above, they found a minimum of the symbol energy-to-noise ratio for the following target parameter: $\gamma^*$= 0.72. Accordingly, using $\gamma^*$ within the equations [7]-[9], the modified coordinates for points P1, P2, P3 may be computed as follows:

$$P1\cong(\sqrt{(Es^*/9.18)}, 0),$$

$$P2\cong(\sqrt{(Es^*/3.66)}, 1.86\sqrt{(Es^*/4.76)})$$

$$P3\cong(3\sqrt{(Es^*/4.76)}, 0).$$

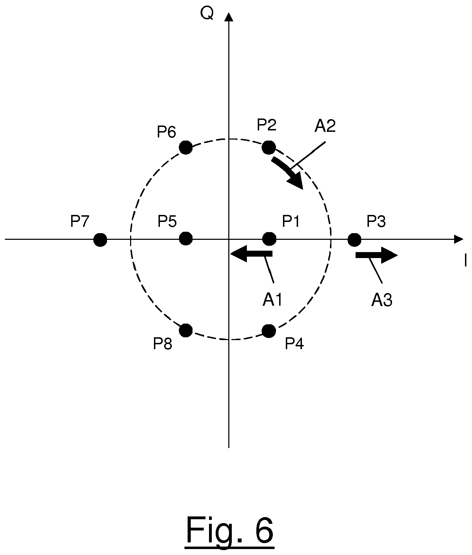

Therefore, according to the above, solving the minimization problem leads to deforming the original constellation. In particular, the constellation points P1, P2 and P3 of Figure 2a are moved within the I-Q plane from their original positions to modified positions that slightly differ from the original ones. Figure 6 shows the original constellation and three arrows A1, A2, A3 indicating the deformation of the constellation due to the modification of the I-Q coordinates of points P1, P2, P3, respectively. It is to be noticed that Figure 6 is not in scale and the heads of the arrows are not indicative of the exact position of the modified constellation points. They merely represent the adjustment of the position of points P1, P2 and P3 according to the outcome of the minimization problem described above. In particular, points P1 and P3 which, in the original constellation, have an Hamming distance equal to 2, in the modified constellation have a higher Euclidean distance than their initial Euclidean distance. Point P2 is also moved from its position in the original constellation to another position indicated by arrow A2, in particular point P2 is moved roughly along the ring on which it is located. This way, the arrangement of the constellation points within the deformed constellation is more uniform than in the original constellation.

The position of the other points P4-P8 of the constellation is adjusted in a symmetric way with respect to the positions of points P1-P3.

The inventors noticed that advantageously, the modified constellation allows recovering nearly 60% of the capacity loss. In other words, the modified constellation allows recovering about 0.24 dB of the SNR penalty affecting the original SP-16QAM constellation.

It is to be noticed that, even if, in the modified constellation, points P1 and P2 have a smaller Euclidean distance than in the original constellation, they advantageously have a minimum Hamming distance, namely a Hamming distance equal to 1, guaranteeing the minimum number of bit errors in case of wrong decision.

The inventors noticed that for the exemplary SP-16QAM scheme considered above, the CM capacity related to the unmodified constellation and the CM capacity related to the modified constellation according to present invention are nearly the same at a given value of $Es/\sigma^2$. This means that modifying the I-Q coordinates of the modulation symbols according to the method of the present invention does not change drastically the capacity characteristics of the constellation. In other words, the method of the present invention allows recovering at least partially the capacity loss due to the non-Gray binary labeling map in the BICM scheme without affecting other properties of the constellation. Moreover, properties that may result in advantages for the implementation of the signal processing stages of the receiver are minimally affected by the introduced deformation of the constellation.

The method according to the present invention can be easily implemented by exploiting the digital-to-analog (DAC) converter that is comprised in the transmitter TX. Indeed, only the labeling map needs to be updated within the modulator MOD as the modified I-Q coordinates, according to the method of the present invention, replace the I-Q coordinates of the unmodified constellation. Therefore, once the modified coordinates of the constellation points are computed according to the method of the present invention, they may be stored within the mapping table of the labeling map in the modulator MOD in place of the coordinates of the constellation points of the unmodified constellation. The operation of the modulator MOD is not modified: the DAC still receives the bit patterns to be transmitted and for each of them recovers the I-Q coordinates of the respective modulation symbol for modulating the signal carrier(s).

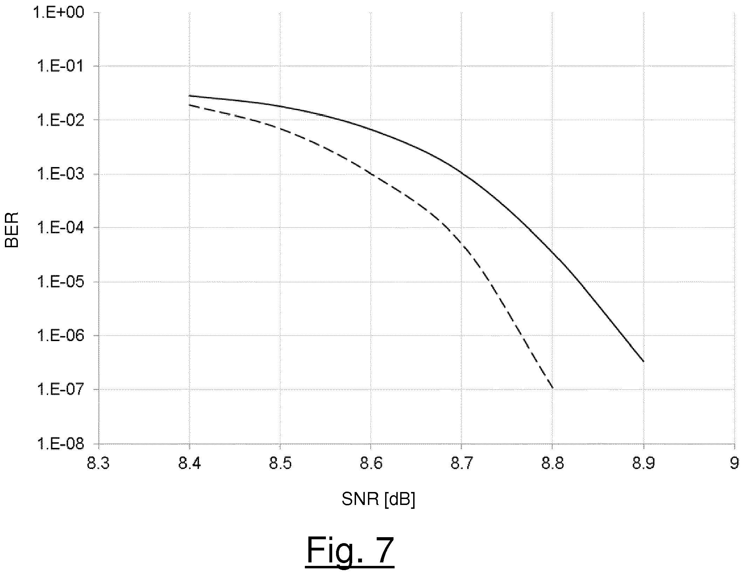

At the receiver RX, the original I-Q coordinates of the constellation points for the given modulation scheme are preferably replaced with the modified I-Q coordinates of the modulation symbols. This apply either when hard decision demapping or soft decision demapping algorithms are implemented. However, it is to be noticed that even if the I-Q coordinates of the constellation points at the receiver RX are not updated, the system is advantageously capable of operating with an acceptable level of reliability. Indeed, the inventors performed some simulations computing the BER by considering the situation in which the I-Q coordinates of the constellation points are not updated at the receiver RX. The outcome of these simulations for the SP-16QAM scheme deformed as described above is shown in Figure 7. Figure 7 reports the curve of the BER achieved when the I-Q coordinates are not updated at the receiver RX, both in case of transmission of the undeformed constellation (solid line) and in case of transmission of the deformed constellation (dashed line). As can be seen, the BER shown by the system when the deformed constellation is transmitted is improved even if the receiver RX is not updated.

In the light of the above, advantageously, the method of the present invention allows not to increase the complexity of the modulation and coding stage at the transmitter and the complexity of the demodulation and decoding stage of the receiver at the network node. This means that the method allows recovering at least partially the capacity loss of a BICM scheme without impacting on the consumed power, the device area and the costs for manufacturing and operating the transmitter and the receiver of the network node.

In the following description, the method according to preferred embodiments of the present invention will be described with reference to a further exemplary modulation scheme, namely the exemplary differential 16-QAM scheme represented in Figures 3a and Figure 3b.

Simulations performed by the inventors show that the BICM capacity of the exemplary differential 16-QAM scheme above suffers from an SNR penalty with respect to the CM capacity. The SNR penalty is equal to about 1 dB, at a code rate R equal to about 0.8.

Also this scheme is symmetric with respect to both the I-axis and the Q-axis. Implementation constraints may involve maintaining the symmetries of the constellation. Hence, a computation subset of constellation points is selected comprising only the constellation points located in the first quadrant, namely P1', P2', P3' and P4'. Only the points in the first quadrant will be considered for the minimization problem and the other points will be deformed in a symmetric manner, thus guaranteeing the fulfillment of the implementation constraints.

In this case, the I-Q coordinates of points P1', P2', P3' and P4' may be written as a function of three parameters, namely a normalizing factor $\alpha$ and two parameters $\beta$, $\gamma$, according to the following:

$$P1' = (X1', Y1') = (\alpha\gamma, \alpha\gamma) \qquad [11]$$

$$P2' = (X2', Y1') = (3\alpha, \alpha\beta) \qquad [12]$$

$$P3' = (X2', Y2') = (3\alpha, 3\alpha) \qquad [13]$$

$$P4' = (X1', Y2') = (\alpha\beta, 3\alpha\,).\qquad\qquad[14]$$

The constrained minimization problem to be solved according to the method of the present invention is the problem of equations [2]-[4] above, namely:

$$\text{minimize}\qquad Es(\alpha,\beta,\gamma)/\sigma^2$$

$$\alpha,\gamma$$
$$\text{subject to}\qquad Es(\alpha,\beta,\gamma)=Es^*$$

$$BER(\sigma^2,\alpha,\beta,\gamma)=BER^*.$$

As in the situation already described above, preferably, the constant value BER* of the bit error rate is chosen as the BER limit of the error correction code employed at the encoder COD of the transmitter TX. This value, in the following example, is equal to about 3.1 E-2.

In this case, applying the optimization constraint on the mean symbol energy of equation [3] and using equation [5] for points P1', P2', P3', P4' (N=4) leads to find a relationship between parameters $\alpha$, $\beta$ and $\gamma$, i.e.

$$\alpha = \sqrt{\frac{Es^*}{18+\beta^2+\gamma^2}}\;.\qquad\qquad[15]$$

Within the unmodified constellation shown in Figure 3a, $\beta=\gamma=1$, $\alpha=\sqrt{(Es^*/20)}$, and point P1', P2', P3', P4' may be expressed as:

$$P1'=(X1',Y1')=(\sqrt{(Es^*/20)},\ \sqrt{(Es^*/20)})$$

$$P2=(X2',Y1')=(3\sqrt{(Es^*/20)},\ \sqrt{(Es^*/20)})$$

$$P3=(X2',Y2')=(3\sqrt{(Es^*/20)},\ 3\sqrt{(Es^*/20)})$$

$$P4=(X1',Y2')=(\sqrt{(Es^*/20)},\ 3\sqrt{(Es^*/20)}).$$

Therefore, the minimization problem above turns out to be a two-dimensional minimization problem over parameters $\beta$ and $\gamma$, whose solution may be found by applying one of the algorithms cited above starting from the unmodified constellation.

In particular, the inventors simulated the BER and, applying a trial and error procedure starting from the unmodified points P1', P2', P3' and P4' reported above, they found a minimum of the symbol energy-to noise ratio for the following target parameters: $\beta^*=1.2$, $\gamma^*=1.1$. Accordingly, using $\beta^*$ and $\gamma^*$ within the equations [11]-[14], the modified coordinates for points P1', P2', P3', P4' may be computed as follows:

$$P1'\cong(\sqrt{(Es^*/17.06)},\ \sqrt{(Es^*/17.06)}),$$

$$P2'\cong(3\sqrt{(Es^*/20.65)},\ \sqrt{(Es^*/14.34)})$$

$$P3'\cong(3\sqrt{(Es^*/20.65)},\ 3\sqrt{(Es^*/20.65)})$$

$$P4'=(\sqrt{(Es^*/14.34)}, 3\sqrt{(Es^*/20.65)}).$$

The positions of the other constellation points P5'-P16' is adjusted in a symmetric manner.

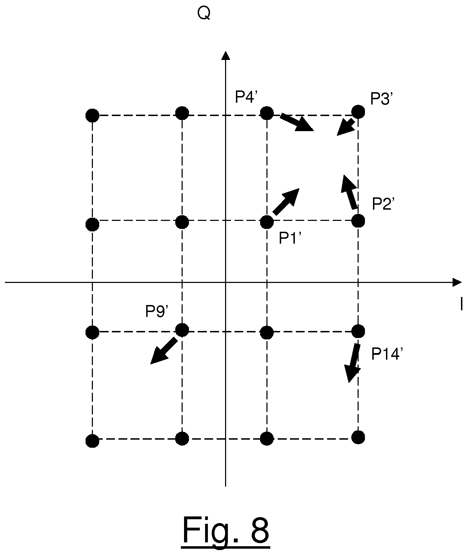

Figure 8 shows the original constellation and four arrows indicating the adjustment of the position of points P1', P2', P3' and P4' according to the above. Moreover, also points P9' and P14' are reported in Figure 8 and the arrows indicating their position adjustment within the modified constellation. As apparent, also in this case, the method of the present invention allows deforming the constellation in order to increase the Euclidean distance of points having higher Hamming distance. As can be seen from Figure 8, points P2' and P14', which, in the original constellation, have the least significant bits with a Hamming distance equal to 2, in the modified constellation have a higher Euclidean distance. The inventors noticed that advantageously, the modified constellation allows recovering about 0.22 dB of the SNR penalty affecting the original differential 16-QAM constellation.

**Claims**

1.  A method for digitally modulating a signal in a communication network, such method comprising:

    selecting a modulation scheme represented by a given constellation of points (P1-P8; P1'-P16') within the complex plane, each point having a given initial position comprising an I-coordinate and a Q-coordinate in the complex plane, the given constellation having a mean symbol energy, and
    modifying the I-coordinate and/or the Q-coordinate of at least one of said constellation points (P1-P3; P1'-P4') around said initial position so as to optimize a performance function associated with said modulation scheme while keeping constant the mean symbol energy, wherein said modulation scheme is a bit interleaved coded modulation scheme in which bit patterns are mapped into modulation symbols according to a non-Gray labelling map,
    and wherein said given modulation scheme is a set partitioning 16-QAM, SP-16QAM, scheme and modifying the I-coordinate and/or Q-coordinate of at least one of said constellation points (P1-P3; P1'-P4') is computed on the basis that:

$$P1\cong(\sqrt{(Es^*/9.18)}, 0),$$

$$P2\cong(\sqrt{(Es^*/3.66)}, 1.86\sqrt{(Es^*/4.76)})$$

$$P3\cong(3\sqrt{(Es^*/4.76)}, 0)$$

    where Es* is the mean symbol energy, and where P1, P2 and P3 are the constellation points located in the first quadrant.

2.  The method according to claim 1, wherein it further comprises;

    selecting a computation subset of constellation points (P1-P3; P1'-P4'),
    expressing at least one of the I-coordinate and Q-coordinate of at least one point of the computation subset (P1-P3; P1'-P4') as a function of a number of parameters,
    determining said performance function as a function of said parameters and
    optimizing said performance function with respect to said parameters and subject to one or more optimization constraints.

3.  The method according to claim 2, wherein said optimizing a performance function comprises one of the following:

    minimizing a mean symbol energy to noise variance ratio, minimizing a bit error rate,
    maximizing a capacity of said modulation scheme.

4.  The method according to claim 3, wherein said optimization constraints comprise one or more of:

keeping the mean symbol energy at a constant value,
keeping the bit error rate at a constant value,
keeping the capacity at a constant value,
keeping the noise variance at a constant value.

5. The method according to any of claims 2 to 4, wherein selecting the computation subset of constellation points (P1-P3; P1'-P4') is performed on the basis of implementation constraints comprising one or more of:

maintaining a symmetry of the constellation,
maintaining a rotational invariance of the constellation,
maintaining a given arrangement of the constellation points within the complex plane.

6. The method according to any of claims 2 to 5, wherein expressing at least one of the I-coordinate and Q-coordinate of at least one point of the computation subset (P1-P3; P1'-P4') as a function of a number of parameters comprises:

associating said number of parameters with the I-coordinate and Q-coordinate of at least one point of the computation subset (P1-P3; P1'-P4') on the basis of parameterization criteria including one or more of: increasing a Euclidean distance between constellation points having a Hamming distance higher than 1, arranging the constellation points in a uniform manner within the complex plane, increasing a Euclidean distance between constellation points at a minimum Hamming distance without bringing those points nearer to other constellation points.

7. The method according to any of claims 2 to 6, wherein it further comprises modifying said at least one of the I-coordinate and Q-coordinate of said at least one point of the computation subset (P1-P3; P1'-P4') using said target parameters that optimize said performance function.

8. The method according to claim 5 or 7, wherein it further comprises modifying the I-coordinate and/or the Q-coordinate of one or more other points of the constellation on the basis of said implementation constraints.

9. A computer program product comprising computer-executable instructions which, when the program is executed by a computer, cause the computer to carry out the steps of the method according to any of the preceding claims.

10. A modulator (MOD) for a transmitter of a network node of a communication network, the modulator (MOD) being configured to digitally modulate a signal according to a modulation scheme represented by a given constellation of points (P1-P8; P1'-P16') within the complex plane, each point having a given initial position comprising an I-coordinate and a Q-coordinate in the complex plane, the given constellation having a mean symbol energy, and to digitally modulate said signal according to said modulation scheme wherein at least one of said constellation points (P1-P3; P1'-P4') is modified around said initial position so as to optimize a performance function associated with said modulation scheme while keeping constant the mean symbol energy, wherein said modulation scheme is a bit interleaved coded modulation scheme in which bit patterns are mapped into modulation symbols according to a non-Gray labelling map,
and wherein said given modulation scheme is a SP-16QAM scheme and modifying the I-coordinate and/or Q-coordinate of at least one of said constellation points (P1-P3; P1'-P4') is computed on the basis that:

$$P1 \cong (\sqrt{(Es^*/9.18)}, 0),$$

$$P2 \cong (\sqrt{(Es^*/3.66)}, 1.86\sqrt{(Es^*/4.76)})$$

$$P3 \cong (3\sqrt{(Es^*/4.76)}, 0).$$

where Es* is the mean symbol energy, and where P1, P2 and P3 are the constellation points located in the first quadrant.

11. The modulator (MOD) according to claim 10, said modulator (MOD) comprising a mapping table storing a labeling map of said modulation scheme comprising the I-coordinates and the Q-coordinates of the constellation points in the complex plane, said mapping table being configured to be updated with a modified I-coordinate and/or a modified Q-coordinate of said at least one of said constellation points (P1-P3; P1'-P4').

12. A network node for a communication network, said network node comprising a modulator (MOD) according to claim 11.

13. A communication network comprising a network node according to claim 12.

**Patentansprüche**

1. Verfahren zum digitalen Modulieren eines Signals in einem Kommunikationsnetzwerk, wobei das Verfahren folgende Schritte umfasst:

    - Wählen eines Modulationsschemas, das durch eine gegebene Konstellation von Punkten (P1 - P8; P1' - P16') innerhalb einer komplexen Ebene repräsentiert wird, wobei jeder Punkt eine gegebene Ausgangsposition besitzt, die eine I-Koordinate und eine Q-Koordinate in der komplexen Ebene aufweist, wobei die gegebene Konstellation eine mittlere Symbolenergie aufweist, und
    - Modifizieren der I-Koordinate und/oder der Q-Koordinate von mindestens einem der Konstellationspunkte (P1 - P3; P1' - P4') um die Ausgangsposition herum, um eine Zielfunktion zu optimieren, die dem Modulationsschema zugeordnet ist, während die mittlere Symbolenergie konstant gehalten wird, wobei das Modulationsschema ein bitmäßig verschachteltes kodiertes Modulationsschema ist, in welchem Bit-Muster in Modulationssymbole abgebildet werden, und zwar gemäß einer Nicht-Gray Kennzeichnungstabelle, und wobei das gegebene Modulationsschema ein vorgegebenes 16-QAM, SP-16QAM-Unterteilungsschema ist, und wobei das Modifizieren der I-Koordinate und/oder der Q-Koordinate von mindestens einem der Konstellationspunkte (P1 - P3; P1' - P4') berechnet wird auf der Basis, dass Folgendes gilt:

$$P1 \cong (\sqrt{(Es^*/9.18)}, 0),$$

$$P2 \cong (\sqrt{(Es^*/3.66)}, 1.86\sqrt{(Es^*/4.76)})$$

$$P3 \cong (3\sqrt{(Es^*/4.76)}, 0).$$

    wobei Es* die mittlere Symbolenergie ist und wobei P1, P2 und P3 die Konstellationspunkte sind, die sich in dem ersten Quadranten befinden.

2. Verfahren nach Anspruch 1,
   das ferner folgende Schritte umfasst:

    - Wählen einer Berechnungs-Untergruppe von Konstellationspunkten (P1 - P3; P1' - P4'),
    - Ausdrücken von mindestens einer von der I-Koordinate und der Q-Koordinate von mindestens einem Punkt aus der Berechnungs-Untergruppe (P1 - P3; P1' - P4') als Funktion einer Anzahl von Parametern;
    - Bestimmen der Zielfunktion als Funktion der Parameter;
    - Optimieren der Zielfunktion bezüglich der Parameter und unter Berücksichtigung von einer oder mehreren Optimierungsbedingungen.

3. Verfahren nach Anspruch 2,
   wobei das Optimieren der Zielfunktion eine der folgenden Bedingungen umfasst:

    - Minimieren der mittleren Symbolenergie für das Rauschabweichungsverhältnis,
    - Minimieren der Bit-Fehlerrate, und
    - Maximieren der Kapazität des Modulationsschemas.

4. Verfahren nach Anspruch 3,
   wobei die Optimierungsbedingungen eine oder mehrere der folgenden Bedingungen umfassen:

- die mittlere Symbolenergie wird auf einem konstanten Wert gehalten,
- die Bit-Fehlerrate wird auf einem konstanten Wert gehalten,
- die Kapazität wird auf einem konstanten Wert gehalten, und
- die Rauschabweichung wird auf einem konstanten Wert gehalten.

**5.** Verfahren nach einem der Ansprüche 2 bis 4,
wobei das Wählen der Berechnungs-Untergruppe von Konstellationspunkten (P1 - P3; P1' - P4') durchgeführt wird auf der Basis von Implementierungs-Bedingungen, die eine oder mehrere der folgenden Bedingungen umfassen:

- Beibehalten der Symmetrie der Konstellation,
- Beibehalten der Rotationsinvarianz der Konstellation, und
- Beibehalten einer vorgegebenen Anordnung von Konstellationspunkten innerhalb der komplexen Ebene.

**6.** Verfahren nach einem der Ansprüche 2 bis 5,
wobei das Ausdrücken von mindestens einer von der I-Koordinate und der Q-Koordinate von mindestens einem Punkt aus der Berechnungs-Untergruppe (P1 - P3; P1' - P4') als Funktion einer Anzahl von Parametern Folgendes umfasst:

- Zuordnen der Anzahl von Parametern mit der I-Koordinate und der Q-Koordinate von mindestens einem Punkt aus der Berechnungs-Untergruppe (P1 - P3; P1' - P4') auf der Basis von Parametrisierungskriterien, die eine oder mehrere von folgenden Maßnahmen umfassen:
- Erhöhen des euklidischen Abstandes zwischen Konstellationspunkten, die einen Hamming-Abstand von größer als 1 besitzen,
- Anordnen der Konstellationspunkte in einer gleichmäßigen Weise innerhalb der komplexen Ebene; und
- Erhöhen des euklidischen Abstandes zwischen Konstellationspunkten bei einem minimalen Hamming-Abstand, ohne diese Punkte näher an andere Konstellationspunkte heranzubringen.

**7.** Verfahren nach einem der Ansprüche 1 bis 6,
das ferner Folgendes umfasst:
Modifizieren von mindestens einer von der I-Koordinate und der Q-Koordinate von mindestens einem Punkt aus der Berechnungs-Untergruppe (P1 - P3; P1' - P4') unter Verwendung der Zielparameter, welche die Zielfunktion optimieren.

**8.** Verfahren nach Anspruch 5 oder 7,
das Folgendes umfasst:
Modifizieren der I-Koordinate und/oder Q-Koordinate von einem oder mehreren Punkten der Konstellation auf der Basis der Implementierungs-Bedingungen.

**9.** Computerprogrammprodukt, das auf einem Computer ausführbare Instruktionen aufweist, die dann, wenn das Programm auf einem Computer ausgeführt wird, den Computer veranlassen, die Schritte des Verfahrens gemäß einem der vorhergehenden Ansprüche auszuführen.

**10.** Modulator (MOD) für einen Sender eines Netzwerkknotens eines Kommunikationsnetzwerks, wobei der Modulator (MOD) derart konfiguriert ist, dass er ein Signal digital moduliert, und zwar gemäß einem Modulationsschema, das repräsentiert wird durch eine gegebene Konstellation von Punkten (P1 - P8; P1' - P16') innerhalb einer komplexen Ebene, wobei jeder Punkt eine gegebene Ausganposition besitzt, die eine I-Koordinate und eine Q-Koordinate in der komplexen Ebene aufweist, wobei die gegebene Konstellation eine mittlere Symbolenergie besitzt, und das Signal digital moduliert, und zwar gemäß einem Modulationsschema, wobei mindestens einer von den Konstellationspunkten (P1 - P3; P1' - P4') um die Ausgangsposition herum modifiziert wird, um eine Zielfunktion zu optimieren, die dem Modulationsschema zugeordnet ist, wobei die mittlere Symbolenergie konstant gehalten wird, wobei das Modulationsschema ein bitmäßig verschachteltes kodiertes Modulationsschema ist, in welchem Bit-Muster in Modulationssymbole abgebildet werden, und zwar gemäß einer Nicht-Gray Kennzeichnungstabelle, und wobei das gegebene Modulationsschema ein SP-16QAM-Schema ist, und wobei das Modifizieren der I-Koordinate und/oder der Q-Koordinate von mindestens einem der Konstellationspunkte (P1 - P3; P1' - P4') berechnet wird auf der Basis, dass Folgendes gilt:

$$P1 \cong (\sqrt{(Es^*/9.18)},\ 0),$$

$$P2 \cong (\sqrt{(Es^*/3.66)},\ 1.86\sqrt{(Es^*/4.76)})$$

$$P3 \cong (3\sqrt{(Es^*/4.76)},\ 0).$$

wobei Es* die mittlere Symbolenergie ist und wobei P1, P2 und P3 Konstellationspunkte sind, die sich im ersten Quadranten befinden.

11. Modulator (MOD) nach Anspruch 10,
wobei der Modulator (MOD) eine Abbildungseinheit aufweist, die eine Kennzeichnungstabelle des Modulationsschemas speichert, das I-Koordinaten und Q-Koordinaten der Konstellationspunkte in der komplexen Ebene aufweist, wobei die Abbildungseinheit derart konfiguriert ist, dass sie mit einer modifizierten I-Koordinate und/oder einer modifizierten Q-Koordinate von mindestens einem von den Konstellationspunkten (P1 - P3; P1' - P4') aktualisiert wird.

12. Netzwerkknoten für ein Kommunikationsnetzwerk,
wobei der Netzwerkknoten einen Modulator (MOD) gemäß Anspruch 11 aufweist.

13. Komm unikationsnetzwert
das einen Netzwerkknoten gemäß Anspruch 12 aufweist.


**Revendications**

1. Procédé de modulation numérique d'un signal dans un réseau de communication, le procédé comprenant :

la sélection d'un schéma de modulation représenté par une constellation donnée de points (P1-P8 ; P1'-P16') se situant au sein du plan complexe, chaque point présentant une position initiale donnée comprenant une coordonnée I et une coordonnée Q dans le plan complexe, la constellation donnée présentant une énergie de symbole moyenne, et
la modification de ladite coordonnée I et/ou de ladite coordonnée Q d'au moins un desdits points de constellation (P1-P3 ; P1'-P4') autour de ladite position initiale afin d'optimiser une fonction de performance associée avec ledit schéma de modulation tout en maintenant constante l'énergie de symbole moyenne, selon lequel ledit schéma de modulation est un schéma de modulation codé de bit entrelacé dans lequel des motifs à bit sont calqués sur des symboles de modulation selon un plan d'étiquetage non-Gray, et selon lequel ledit schéma de modulation est un schéma à partitionnement fixe (16QAM, SP-16QAM) ; et
la modification de la coordonnée I et/ou de la coordonnée Q d'au moins un desdits points de constellation (P1-P3 ; P1'-P4') est calculée sur la base que :

$$P1 = (\sqrt{(Es^*/9{,}18)},\ 0)$$

$$P2 = (\sqrt{(Es^*/3{,}66)},\ 1{,}86\sqrt{(Es^*/4{,}76)})$$

$$P3 = (3\sqrt{(Es^*/4{,}76)},\ 0)$$

où Es est l'énergie de symbole moyenne, et selon lequel P1, P2, et P3 sont des points de constellation situés dans le premier quartier.

2. Procédé selon la revendication 1, lequel comprend en outre :

la sélection d'un sous-ensemble de calcul de points de constellation (P1-P3 ; P1'-P4') ;
l'expression d'au moins une parmi la coordonnée I ou la coordonnée Q d'au moins un point du sous-ensemble de calcul (P1-P3 ; P1'-P4') en fonction d'un nombre de paramètres ;
la détermination de ladite fonction de performance en fonction desdits paramètres ; et

l'optimisation de ladite fonction de performance par rapport auxdits paramètres et sous réserve de l'application d'une ou plusieurs contraintes d'optimisation.

3. Procédé selon la revendication 2, selon lequel l'optimisation de la fonction de performance comprend l'une parmi les opérations suivantes :

la minimisation d'un rapport entre l'énergie de symbole moyenne et une variance de bruit, la minimisation d'un taux d'erreur de bit ;
la maximisation d'une capacité du schéma de modulation.

4. Procédé selon la revendication 3, selon lequel lesdites contraintes d'optimisation comprend l'une ou plusieurs des opérations suivantes :

le maintien de l'énergie de symbole moyenne à une valeur constante ;
le maintien du taux d'erreur de bit à une valeur constante ;
le maintien de la capacité à une valeur constante ;
le maintien de la variance de bruit à une valeur constante.

5. Procédé selon l'une quelconque des revendications 2 à 4 précédentes, selon lequel la sélection d'un sous-ensemble de calcul des points de constellation (P1-P3 ; P1'-P4') est effectuée sur la base de contraintes d'implémentation comprenant l'une ou plusieurs parmi les opérations suivantes :

le maintien de la symétrie de la constellation ;
le maintien d'une invariance rotationnelle de la constellation ;
le maintien d'une configuration donnée des points de constellation au sein du plan complexe.

6. Procédé selon l'une quelconque des revendications 2 à 5, selon lequel l'expression d'au moins une parmi la coordonnée I et la coordonné Q d'au moins un point du sous-ensemble de calcul (P1-P3 ; P1'-P4') en fonction d'un nombre de paramètres comprend :
l'association dudit nombre de paramètres à la coordonnée I et la coordonné Q d'au moins un point du sous-ensemble de calcul (P1-P3 ; P1'-P4') sur la base de critères de paramétrage incluant l'un ou plusieurs parmi :

l'augmentation d'une distance euclidienne entre des points de constellation présentant une distance de Hanning supérieure à 1 ;
l'arrangement des points de constellation de manière uniforme au sein du plan complexe ;
l'augmentation d'une distance euclidienne entre des points de constellation présentant une distance de Hanning minimum sans faire rapprocher ces points aux autres points de constellation.

7. Procédé selon l'une quelconque des revendications 2 à 6, lequel comprend en outre la modification de ladite au moins une coordonnée parmi la coordonnée I et la coordonnée Q dudit au moins un point du sous-ensemble de calcul (P1-P3 ; P1'-P4') mettant en œuvre lesdits paramètres cibles effectuant l'optimisation de la fonction de performance.

8. Procédé selon la revendication 5 ou la revendication 7, lequel comprend en outre la modification de la coordonnée I et/ou la coordonnée Q d'un ou plusieurs autres points de la constellation sur la base desdites contraintes d'implémentation.

9. Produit de programme d'ordinateur comprenant des instructions exécutables par ordinateur qui, lorsqu'elles sont exécutées par un ordinateur, ont pour effet de faire fonctionner l'ordinateur pour effectuer les étapes du procédé selon l'une quelconque des revendications précédentes.

10. Modulateur (MOD) pour un émetteur d'un nœud de réseau d'un réseau de communication, le modulateur (MOD) étant configuré pour moduler numériquement un signal selon un schéma de modulation représenté par une constellation donnée de points (P1-P8 ; P1'-P16') se situant au sein du plan complexe, chaque point présentant une position initiale donnée comprenant une coordonnée I et une coordonnée Q dans le plan complexe, la constellation donnée présentant une énergie de symbole moyenne, et pour moduler numériquement ledit signal selon ledit schéma de modulation, selon lequel au moins un desdits points de constellation (P1-P3 ; P1'-P4') est modifié autour de ladite position initiale afin d'optimiser une fonction de performance associée avec ledit schéma de modulation tout en maintenant constante l'énergie de symbole moyenne, selon lequel ledit schéma de modulation est un schéma de modulation codé de bit entrelacé dans lequel des motifs à bit sont calqués sur des symboles de modulation selon un plan d'étiquetage non-Gray, et selon lequel ledit schéma de modulation est un schéma à partitionnement fixe SP-16QAM ; et

la modification de la coordonnée I et/ou de la coordonnée Q d'au moins un desdits points de constellation (P1-P3 ; P1'-P4') est calculée sur la base que :

$$P1 = (\sqrt{(Es^*/9,18)}, 0)$$

$$P2 = (\sqrt{(Es^*/3,66)}, 1,86\sqrt{(Es^*/4,76)})$$

$$P3 = (3\sqrt{(Es^*/4,76)}, 0)$$

où Es est l'énergie de symbole moyenne, et selon lequel P1, P2, et P3 sont des points de constellation situés dans le premier quartier.

11. Modulateur (MOD) selon la revendication 10, ledit modulateur (MOD) comprenant une table de calquage stockant un plan d'étiquetage dudit schéma de modulation comprenant les coordonnées I et Q des points de constellation (P1-P3 ; P1'-P4').

12. Nœud de réseau pour un réseau de communication, ledit nœud de réseau comprenant un modulateur (MOD) selon la revendication 11.

13. Réseau de communication comprenant un nœud de réseau selon la revendication 12.

Fig. 1

Fig. 2b

Fig. 2a

**Fig. 3a**

**Fig. 3b**

EP 2 916 507 B1

EP 2 916 507 B1

|  | I | Q |
|---|---|---|
| 001 | X1 | 0 |
| 011 | X1 | Y1 |
| 010 | X2 | 0 |
| 000 | X1 | -Y1 |
| 101 | -X1 | 0 |
| 111 | -X1 | Y1 |
| 110 | -X2 | 0 |
| 100 | -X1 | -Y1 |

## Fig. 4

EP 2 916 507 B1

Fig. 5

EP 2 916 507 B1

Fig. 6

Fig. 7

EP 2 916 507 B1

Fig. 8

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- EP 0948140 B1

- WO 2013117883 A

## Non-patent literature cited in the description

- **CAIRE et al.** Bit-Interleaved Coded Modulation. *IEEE Transactions on Information Theory,* May 1998, vol. 44 (3
- **BRENDAN F.D. MOORE.** *Pairwise optimization of modulation constellations for non-uniform sources,* 01 January 2010, ISBN 978-0-49-465225-1

- **RICCARDO DE GAUDENZI et al.** Turbo-coded APSK modulations design for satellite broadband communications. *International Journal of satellite communications and networking,* 01 July 2006, vol. 24 (4), 261-281